# EUROPEAN PATENT APPLICATION

(11) **EP 3 373 126 A1**
(43) Date of publication of application: **12.09.2018**
(21) Application number: 18157653.9
(22) Date of filing: 20.02.2018
(51) Int. Cl.: G06F 3/12

(54) **PORTABLE TERMINAL FOR PRINTING WITH A PRINTER**

(30) Priority: 08.03.2017 JP 2017044059
(71) Applicant: Toshiba TEC Kabushiki Kaisha, Tokyo 141-8562 (JP)
(72) Inventor: LEAW, SiewWhan, 569138 Singapore (SG); KOSASIH, Antonius, 569138 Singapore (SG); WATANABE, Noriyuki, Shinagawa-ku,, Tokyo 141-8562 (JP)
(74) Representative: Takeuchi, Maya

(57) **Abstract**

According to an embodiment, a portable device includes a reading device that reads an identification information image that is output from the printer. A communication interface wirelessly communicates with the printer. A processor identifies an authentication key included in the identification information image read by the reading device. The processor transmits, via the communication interface, the identified authentication key to the printer. The processor receives, via the communication interface and in response to transmitting the identified authentication key, a notification that the portable device is authorized to use the printer to print. When the notification is received, the processor controls the communication interface to transmit print data to the printer to cause the printer to print an image corresponding to the print data.

## Description

### FIELD

Embodiments described herein relate generally to a portable terminal for printing with a printer, and more particularly to a device which can communicate with a printer, a system comprising the same and a method related thereto.

### BACKGROUND

A sale information management system, referred to as a point-of-sales (POS) system, includes a POS printer as one kind of terminal. The POS printer performs printing on a recording medium such as a receipt sheet.

A portable terminal such as a smart phone or a tablet terminal is also used in the POS system, and data from the portable terminal may need to be printed by using the POS printer. Communication of data between the printer and the portable terminal may be performed via, for example, a wireless interface such as Wi-Fi (registered trademark). The portable terminal and the printer are wirelessly connected to each other, and thus it is possible to print data from the portable terminal by using the printer.

Meanwhile, when communication of information between the portable terminal and the printer is performed, from a viewpoint of security, user authentication to determine whether or not a user is an authorized user is performed so that only an authorized user can use the printer. As an authentication method, for example, a method of setting an service sell identifier (SSID) in a portable terminal or a method of setting a password may be provided.

Various operating systems (OSs) are employed as software for collectively managing hardware and software of a computer and executing various applications. Android (registered trademark), iOS (registered trademark), or the like is employed in a portable terminal such as a smart phone.

However, an authentication method of Wi-Fi may not support a terminal device using Android (registered trademark) or iOS (registered trademark). Generally, it is not possible to cause a portable terminal to communicate with a printer if a use authority of the portable terminal is not authorized. Thus, only a portable terminal using a certain OS can communicate with a printer.

### SUMMARY OF INVENTION

To solve the above-cited problems, there is provided a device, comprising:
a reading device configured to read an identification information image that is output from a printer;
   a communication interface configured to wirelessly communicate with the printer; and
a processor configured to:
   identify an authentication key included in the identification information image read by the reading device,
      transmit, via the communication interface, the identified authentication key to the printer,
   receive, via the communication interface and in response to transmitting the identified authentication key, a notification that the device is authorized to use the printer to print, and
   when the notification is received, control the communication interface to transmit print data to the printer to cause the printer to print an image corresponding to the print data.

In an exemplary embodiment the device preferably may further comprise:
a storage device that stores an application program and an operating system, wherein the processor identifies the authentication key by executing the application program and the operating system.

In the embodiments the reading device preferably may read the identification information image printed on a sheet output from the printer.

In the embodiments the reading device preferably may read the identification information image displayed on a display device of the printer.

In the embodiments preferably the identification information image may be a QR code.

The device according to the embodiments preferably may further comprise:
a display device, wherein when the notification is not received in response to transmitting the identified authentication key a predetermined number of times, the processor controls the display device to display a notification that the printer is not available for printing from the device.

In the embodiments preferably the authentication key may be generated every time or on a periodic basis.

In another exemplary embodiment there is also provided a system comprising:
the printer; and
the device according to the embodiments,
wherein the device is configured as a portable information processing device.

In yet another exemplary embodiment there is also provided a method of printing using a device that wirelessly communicates with a printer, the method comprising:
reading, with a reading device of the device, an identification information image that is output from the printer;
identifying an authentication key included in the identification information image read by the reading device;
   transmitting the identified authentication key to the printer;
receiving, in response to transmitting the identified authentication key, a notification that the device is authorized to use the printer to print; and
when the notification is received, transmitting print data to the printer to cause the printer to print an image corresponding to the print data.

The method according to the embodiment preferably may further comprise:
storing an application program and an operating system in a storage device on the device, wherein the authentication key is identified by executing the application program and the operating system.

In the embodiments the reading device preferably may read the identification information image printed on a sheet output from the printer.

In the embodiments the reading device preferably may read the identification information image displayed on a display device of the printer.

In the embodiments preferably the identification information image may be a QR code.

The method according to the embodiments preferably may further comprise:
when the notification is not received in response to transmitting the identified authentication key a predetermined number of times, displaying on the device a notification that the printer is not available for printing from the device.

In yet another exemplary embodiment there is also provided a non-transitory computer readable medium containing instructions causing a device that wirelessly communicates with a printer to perform a printing method, the method comprising:
reading, with a reading device of the device, an identification information image that is output from the printer;
identifying an authentication key included in the identification information image read by the reading device;
   transmitting the identified authentication key to the printer;
receiving, in response to transmitting the identified authentication key, a notification that the device is authorized to use the printer to print; and
when the notification is received, transmitting print data to the printer to cause the printer to print an image corresponding to the print data.

In the embodiment the method preferably may further comprise:
storing an application program and an operating system in a storage device on the device, wherein the authentication key is identified by executing the application program and the operating system.

In the embodiments the instructions preferably may cause the reading device to read the identification information image printed on a sheet output from the printer.

In the embodiments the instructions preferably may cause the reading device to read the identification information image displayed on a display device of the printer.

In the embodiments preferably the identification information image may be a QR code.

In the embodiments the method preferably may further comprise:
when the notification is not received in response to transmitting the identified authentication key a predetermined number of times, displaying on the device a notification that the printer is not available for printing from the device.

In the embodiments the device preferably may be configured as a portable information processing device.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a schematic diagram illustrating a printer and an information processing device according to an embodiment.
FIG. 2 is a block diagram illustrating an example configuration of the printer.
FIG. 3 is a block diagram illustrating an example configuration of the information processing terminal device.
FIG. 4 is a sequence diagram illustrating user authentication processing between the printer and the information processing terminal device.
FIG. 5 is a flowchart illustrating a flow of information processing in the information processing terminal device.

### DETAILED DESCRIPTION

Embodiments provide an information processing terminal device and a method in which use permission is easily obtained to allow communication of print data for printing to a printer.

According to an embodiment, a portable device includes a reading device that reads an identification information image that is output from the printer. A communication interface wirelessly communicates with the printer. A processor identifies an authentication key included in the identification information image read by the reading device. The processor transmits, via the communication interface, the identified authentication key to the printer. The processor receives, via the communication interface and in response to transmitting the identified authentication key, a notification that the portable device is authorized to use the printer to print. When the notification is received, the processor controls the communication interface to transmit print data to the printer to cause the printer to print an image corresponding to the print data.
Hereinafter, an embodiment will be described with reference to the drawings. In the drawings, the same places are denoted by the same reference signs.

### First Embodiment

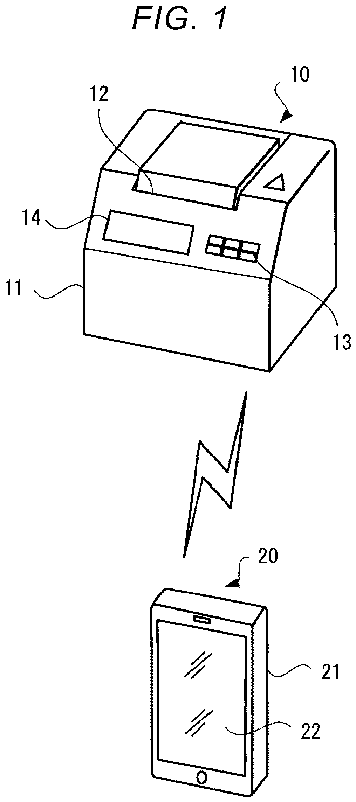

FIG. 1 is a schematic diagram illustrating a printer 10 and an information processing device 20 according to an embodiment. The printer 10 is, for example, a POS printer provided in a store. The information processing device 20 is a portable terminal such as a smart phone or a tablet terminal. The information processing device 20 is hereinafter referred to as a portable terminal 20.

The printer 10 includes a housing 11 and an issue port 12 for a receipt sheet on an upper surface of the housing 11. The printer 10 includes an operation unit 13 and a display device 14 at the front surface of the housing 11. The printer 10 prints and issues a receipt sheet based on receipt data received from a POS terminal.

The portable terminal 20 is a terminal such as a smart phone or a tablet terminal. The portable terminal 20 includes a main body 21 and a touch screen display 22. The touch screen display 22 includes a flat panel display such as a liquid crystal display device, and a touch panel. The touch panel receives input according to a touch of a finger or a pen of a user. The touch screen display 22 is hereinafter referred to as a display 22.

The printer 10 and the portable terminal 20 perform wireless communication with each other via, for example, a wireless interface such as Wi-Fi (registered trademark) .

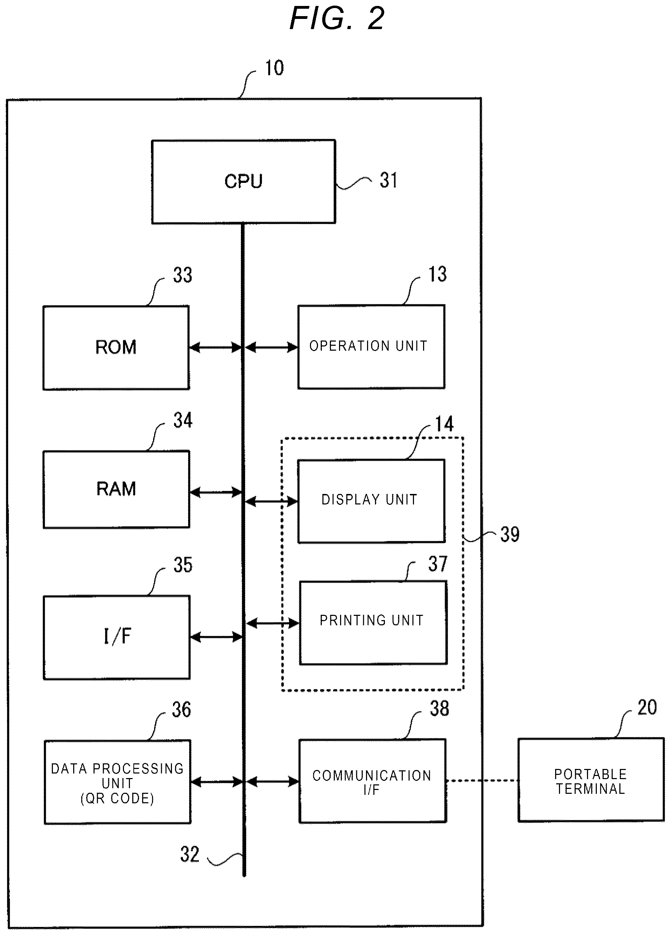

FIG. 2 is a block diagram illustrating an example configuration of the printer 10. As illustrated in FIG. 2, the printer 10 includes a central processing unit (CPU) 31 as a control unit. A read only memory (ROM) 33, a random access memory (RAM) 34, an interface (I/F) 35, and a data processing unit 36 are connected to the CPU 31 via a bus line 32 (address bus, data bus, and the like).

The operation unit 13, the display device 14, a printing unit 37, a communication interface (I/F) 38, and the like are also connected to the CPU 31 via the bus line 32.

The CPU 31 controls the overall operation of the printer 10. The ROM 33 stores fixed data such as program data including a control program and setting data, in advance. The CPU 31 reads the program stored in the ROM 33 and executes the program using the RAM 34 so as to control the components of the printer 10. The RAM 34 includes various memory areas such as a buffer area in which print data is deployed. The RAM 34 includes an area for storing data such as a message to be printed on paper (receipt sheet).

The interface (I/F) 35 is connected to a POS terminal (not illustrated) and receives transaction data corresponding a commercial transaction from the POS terminal. The transaction data includes a transaction date and time, a transaction number, a commodity code, a commodity name, price, and the like, a subtotal amount, a tax amount, a total amount, a deposit amount, a change amount, and the like.

The data processing unit 36 generates an identification information image including an authentication key. The authentication key is used for permitting communication between the printer 10 and the portable terminal 20. The identification information image is, for example, a QR code (registered trademark).

In the printing unit 37, for example, a platen roller and a thermal roller are positioned facing each other. When paper (receipt sheet) passes between the platen roller and the thermal roller, the thermal roller is brought into contact with a recording surface of the paper and applies thermal energy to the paper. Thus, letters and the like are printed on the recording surface of the paper. The display device 14 and the printing unit 37 together are an example of an output unit 39.

The communication interface (I/F) 38 is, for example, a wireless interface such as Wi-Fi (registered trademark) . The communication interface 38 is used for performing wireless communication with the portable terminal 20.

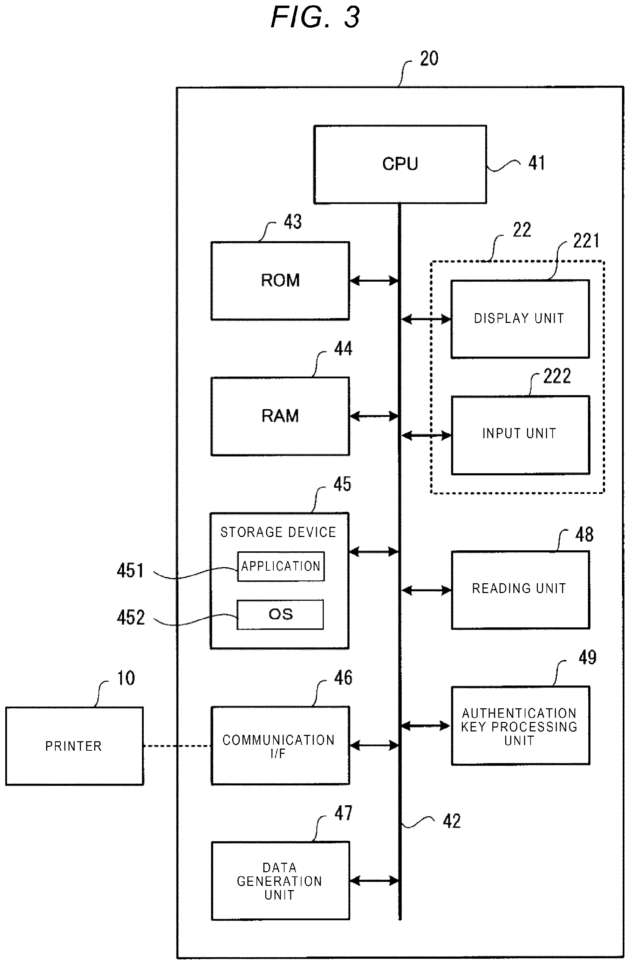

Next, an example configuration of the portable terminal 20 will be described. FIG. 3 is a block diagram illustrating an example configuration of the portable terminal 20. As illustrated in FIG. 3, the printer 10 includes a central processing unit (CPU) 41 as a control unit. A read only memory (ROM) 43, a random access memory (RAM) 44, a storage device 45, a communication interface (I/F) 46, and a data generation unit 47 are connected to the CPU 41 via a bus line 42 (address bus, data bus, and the like).

The display 22, a reading device 48, an authentication key processing unit 49, and the like are also connected to the CPU 41 via the bus line 42. The display 22 includes a display device (flat panel display) 221 and an input device (touch panel) 222.

The CPU 41 controls the overall operation of the portable terminal 20. The ROM 43 stores a control program, control data, and the like in advance. The CPU 41 reads the program stored in the ROM 43, and executes the program using the RAM 44 so as to control the components of the portable terminal 20.

The storage device 45 stores an application program 451 and an operating system (OS) 452. The OS 452 is a program for managing the portable terminal 20. The CPU 41 executes the application program 451 stored in the storage device 45. The application program 451 includes a Web application in addition to general software such as word processing software.

In the embodiment, as the OS 452, for example, Android (registered trademark) or iOS (registered trademark) is employed.

The communication interface (I/F) 46 is, for example, an interface for wireless communication, such as Wi-Fi (registered trademark) . The communication interface 46 is used for performing wireless communication with the printer 10. The communication I/F 46 receives data from the printer 10 or transmits data to the printer 10, in accordance with an instruction of the CPU 41.

The display device 221 displays various types of information based on control of the CPU 41. The input device 222 receives various instructions input by an operator of the portable terminal 20. The data generation unit 47 generates print data based on an instruction of the input device 222.

The reading device 48 reads an identification information image (QR code (registered trademark)) which is printed on a sheet by the printer 10. Alternatively, the reading device 48 reads an identification information image displayed in the display device 14 of the printer 10. The reading device 48 is, for example, a scanner or a camera.

An authentication key included in the identification information image is identified by the application program 451 and the OS 452 stored in the storage device 45, based on the identification information image read by the reading device 48. That is, the application program 451 and the OS 452 in the storage device 45 are executed by the CPU 41 to function as an authentication key reading device. The authentication key processing unit 49 receives the authentication key read by the authentication key reading unit, and transmits the authentication key to the printer 10 as a response.

In the embodiment, when a user wishes to print data from the portable terminal 20 such as a smart phone or a tablet terminal by, for example, using the POS printer 10, the portable terminal 20 and the printer 10 perform wireless communication with each other, and thus the data from the portable terminal 20 can be printed by using the printer 10. In this case, from a viewpoint of security, user authentication is performed such that only an authorized user can use the printer 10 with portable terminal 20.

Communication of information between the printer 10 and the portable terminal 20 in the embodiment will be described below.

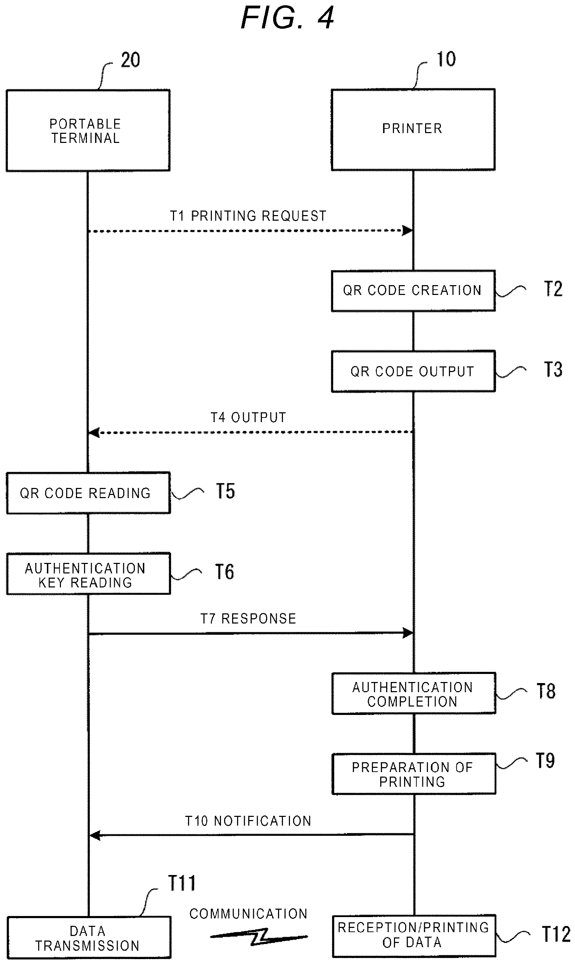

FIG. 4 is a sequence diagram illustrating user authentication processing between the printer 10 and the portable terminal 20. When a user wishes to print data from the portable terminal 20 by using the printer 10, the user of the portable terminal 20 transmits a printing request to the printer 10 at a timing T1. In this case, for example, a print button in the operation unit 13 of the printer 10 is pressed for several seconds. The data processing unit 36 of the printer 10 receives the printing request, and creates an identification information image (QR code (registered trademark)) including an authentication key at T2. The authentication key is generated every time. Alternatively, the authentication key is generated on a periodic basis.

If the print button in the operation unit 13 is pressed again, the printer 10 outputs the created identification information image at T3. For example, the printing unit 37 of the printer 10 prints the identification information image on a sheet and outputs the printed sheet. Alternatively, the printing unit 37 displays the identification information image on the display device 14 of the printer 10. In FIG. 4, printing or display of the identification information image is indicated by "output" (T4) .

The reading device 48 of the portable terminal 20 reads the identification information image output from the printer 10, at T5. The identification information image is read by scanning with a scanner or by capturing with a camera. The authentication key reading unit (OS and application program implemented with the CPU 41) of the portable terminal 20 reads an authentication key included in the identification information image, at T6.

The storage device 45 of the portable terminal 20 stores the application program 451 for recognizing an authentication key and the OS 452 (for example, Android (registered trademark) or iOS (registered trademark)). Thus, the application program 451 is executed by the OS 452 to read the authentication key. The authentication key processing unit 49 receives the read authentication key, and transmits the authentication key to the printer as a response via the communication I/F 46 at T7.

The printer 10 receives the authentication key which is transmitted via the communication I/F 38, at T8. The CPU 31 of the printer 10 controls the printing unit 37 to prepare printing at T9. If printing preparation is completed, the CPU 31 of the printer 10 notifies the portable terminal 20 that authentication processing is complete, that is, printing is enabled at T10.

The data generation unit 47 of the portable terminal 20 generates print data based on an instruction of the input device 221. The CPU 41 of the portable terminal 20 performs control to transmit the print data generated by the data generation unit 47 to the printer 10, when receiving the notification that the authentication processing is complete from the printer 10. In this manner, the print data is transmitted to the printer 10 via the communication I/F 46 at T11. The printer 10 receives the print data and causes the printing unit 37 to print the received print data on a sheet, at T12.

In this manner, when the authentication key generated by the printer 10 is read by the portable terminal 20, use authority is assigned to the portable terminal 20, and the portable terminal 20 can print data by using the printer 10.

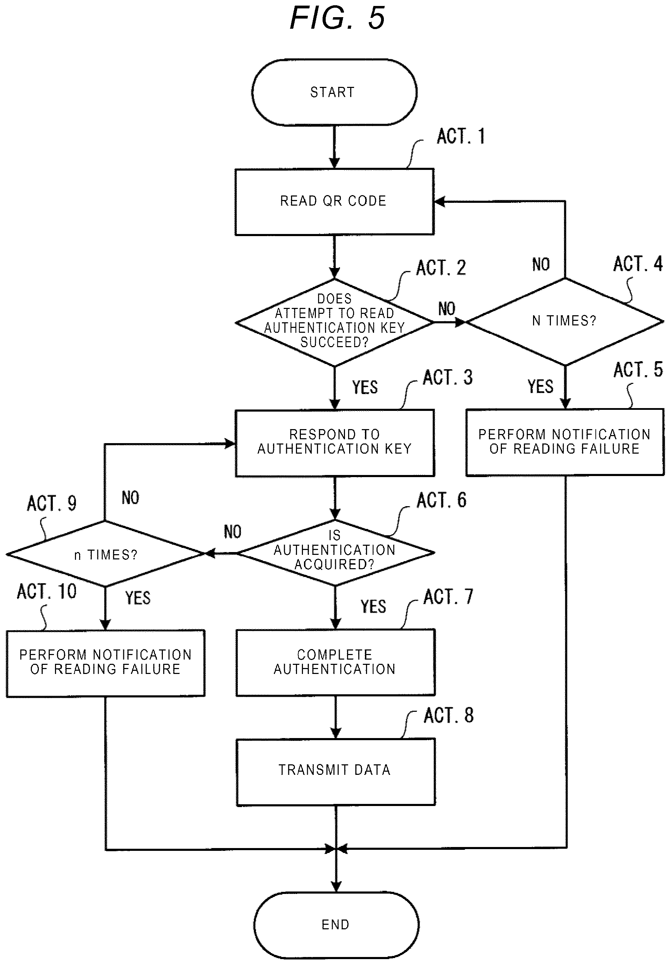

FIG. 5 is a flowchart illustrating a flow of information processing in the portable terminal 20. In FIG. 5, the reading device 48 of the portable terminal 20 reads an identification information image (QR code (registered trademark)) output from the printer 10, in ACT.1 (Operation 1). In ACT.2, the authentication key processing unit 49 receives the authentication key read by the OS 452 and the application program 451, and determines whether or not the attempt to read the authentication key succeeds.

When the attempt to read the authentication key succeeds (determination in ACT.2 is YES), the authentication key processing unit 49 transmits the authentication key to the printer 10 via the communication I/F 46, as a response, in ACT.3.

When the attempt to read the authentication key fails (determination in ACT.2 is NO), it is determined whether or not reading of the identification information image and reading of the authentication key has been performed N times, in ACT.4. When reading of the authentication key fails the defined number of times (N times) (determination of ACT.4 is YES), the process proceeds to ACT.5. The CPU 41 displays information indicating that the attempt to read the authentication key fails, that is, that the printer is not available, in the display device 222. The defined number of times (N times) may be one or plural.

If the authentication key is transmitted to the printer 10, in ACT. 3, and if the authentication processing in the printer 10 is successful, a notification that authentication is complete (message indicating that printing is enabled) is received from the printer 10. In ACT.6, the CPU 41 determines whether or not authentication is complete, based on the notification from the printer 10. If the notification that authentication is complete is received in ACT.6, the CPU 41 determines that authentication is completed in ACT. 7. In ACT. 8, the portable terminal 20 transmits the print data generated by the data generation unit 47 to the printer 10. In this manner, the portable terminal 20 causes the printer 10 to print print data generated by the portable terminal 20.

When, in ACT. 6, the notification that authentication is complete is not received (determination of ACT. 6 is NO), the CPU 41 determines whether or not the authentication key is transmitted to the printer 10 is performed n times, in ACT. 9. When the authentication key is transmitted to the printer 10a the defined number of times (n times) without receiving the notification that authentication is complete (determination of ACT.9 is YES), the processing proceeds to ACT.10. The CPU 41 displays a message indicating that an attempt of authentication fails, that is, information indicating that the printer 10 is not available, in the display device 222. The defined number of times (n times) may be one or plural.

According to the embodiment, only the portable terminal 20 which includes an application program dedicated to reading an authentication key generated by the printer 10 can communicate with the printer. Thus, it is possible to provide for authentication prior to permitting communication with the printer.

The printer 10 is not limited to the POS printer, and may be other business printers or a home printer. The printer 10 is not limited to a thermal printer, and any printer, for example, a thermal transfer type printer using an ink ribbon or an ink jet printer may be used so long as the printer can communicate with the portable terminal 20.

The portable terminal 20 is not limited to a smart phone or a tablet terminal, and may be an information processing terminal such as a personal computer. The identification information image is not limited to the QR code (registered trademark), and any image, for example, a bar code may be used so long as the image can be read by the reading device 48.

In the example, a case where the program (OS, application program) for the embodiment is stored in advance in the device (portable terminal 20) is described. However, it is not limited thereto. The program may be downloaded to the device from a network or an object in which the program is recorded in a recording medium may be installed in the device. The form of the recording medium, for example, a CD-ROM is not limited so long as the recording medium can store a program and the device can read the program in the recording medium. As described above, the program providing the functions described in the above embodiment may be previously installed or downloaded and may be realized in cooperation with the OS and the like in the device.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A device, comprising:
a reading device configured to read an identification information image that is output from a printer;
a communication interface configured to wirelessly communicate with the printer; and
a processor configured to:
identify an authentication key included in the identification information image read by the reading device,
transmit, via the communication interface, the identified authentication key to the printer,
receive, via the communication interface and in response to transmitting the identified authentication key, a notification that the device is authorized to use the printer to print, and
when the notification is received, control the communication interface to transmit print data to the printer to cause the printer to print an image corresponding to the print data.

2. The device according to claim 1, further comprising:
a storage device that stores an application program and an operating system, wherein the processor identifies the authentication key by executing the application program and the operating system.

3. The device according to claim 1 or 2, wherein the reading device reads the identification information image printed on a sheet output from the printer.

4. The device according to claim 1 or 2, wherein the reading device reads the identification information image displayed on a display device of the printer.

5. The device according to any one of claims 1 to 4, wherein the identification information image is a QR code.

6. The device according to any one of claims 1 to 5, further comprising:
a display device, wherein when the notification is not received in response to transmitting the identified authentication key a predetermined number of times, the processor controls the display device to display a notification that the printer is not available for printing from the device.

7. The device according to any one of claims 1 to 6, wherein the authentication key is generated every time or on a periodic basis.

8. A system comprising:
the printer; and
the device according to any one of claims 1 to 7,
wherein the device is configured as a portable information processing device.

9. A method of printing using a device that wirelessly communicates with a printer, the method comprising:
reading, with a reading device of the device, an identification information image that is output from the printer;
identifying an authentication key included in the identification information image read by the reading device;
transmitting the identified authentication key to the printer;
receiving, in response to transmitting the identified authentication key, a notification that the device is authorized to use the printer to print; and
when the notification is received, transmitting print data to the printer to cause the printer to print an image corresponding to the print data.

10. The method according to claim 9, further comprising:
storing an application program and an operating system in a storage device on the device, wherein the authentication key is identified by executing the application program and the operating system.

11. The method according to claim 9 or 10, wherein the reading device reads the identification information image printed on a sheet output from the printer.

12. The method according to claim 9 or 10, wherein the reading device reads the identification information image displayed on a display device of the printer.

13. The method according to any one of claims 9 to 12, wherein the identification information image is a QR code.

14. The method according to any one of claims 9 to 13, further comprising:
when the notification is not received in response to transmitting the identified authentication key a predetermined number of times, displaying on the device a notification that the printer is not available for printing from the device.

15. A non-transitory computer readable medium containing instructions causing a device that wirelessly communicates with a printer to perform the method according to any one of claims 9 to 14.
